(19) Europäisches Patentamt
European Patent Office
Office européen des brevets

(11) **EP 4 580 125 A1**

(12) **EUROPEAN PATENT APPLICATION**

(43) Date of publication:
**02.07.2025 Bulletin 2025/27**

(21) Application number: 24220767.8

(22) Date of filing: **17.12.2024**

(51) International Patent Classification (IPC):
*H04L 9/40* (2022.01)        *H04L 41/16* (2022.01)
*H04L 41/40* (2022.01)

(52) Cooperative Patent Classification (CPC):
**H04L 63/20; H04L 41/0894; H04L 41/16;
H04L 43/08; H04L 43/16; H04L 43/20;**
H04L 41/046; H04L 41/0895; H04L 41/5009;
H04L 43/0823; H04L 43/0852

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023 US 202318399444**

(71) Applicant: **Nokia Solutions and Networks Oy
02610 Espoo (FI)**

(72) Inventors:
• **KAROUI, Mouna
  91940 Les Ulis (FR)**
• **ENRICI, Andrea
  92340 Bourg la Reine (FR)**
• **USCUMLIC, Bogdan
  91400 Orsay (FR)**

(74) Representative: **Novagraaf Technologies
Bâtiment O2
2, rue Sarah Bernhardt
CS90017
92665 Asnières-sur-Seine Cedex (FR)**

(54) **SAFETY FUSE FOR MACHINE LEARNING TRUST MANAGEMENT IN INTERNET PROTOCOL NETWORKS**

(57)    A software-defined network controller includes at least one processor and memory storing computer-executable instructions coupled to the at least one processor. The at least one processor is configured to execute the computer-executable instructions to cause the software-defined network controller to monitor performance characteristics of a machine learning trust manager, and evaluate the performance characteristics to determine whether the machine learning trust manager satisfies a performance threshold. In response to determining that the machine learning trust manager fails to satisfy the performance threshold, the processor deactivates the machine learning trust manager, and activates a deterministic trust manager in place of the machine learning trust manager.

FIG. 1

## Description

FIELD

The present disclosure relates to trust management, and more particularly for example, to a safety fuse for machine learning trust management in Internet Protocol (IP) networks.

BACKGROUND

Machine Learning (ML), Deep Learning (DL), and Artificial Intelligence (AI) may be useful for various applications in computer networks and telecommunications. But ML and AI systems are known to be vulnerable to training data tampering, which may result in misclassification, and/or maliciously crafted inputs, which may cause erroneous predictions during the inference process.

SUMMARY

The scope of protection sought for various example embodiments is set out by the independent claims. The example embodiments and/or features, if any, described in this specification that do not fall under the scope of the independent claims are to be interpreted as examples useful for understanding various embodiments.

As used herein, the term "agent," is used to refer generally to a resource that performs a task on behalf of a host device. An agent includes processing hardware executing instructions that may cause the processing hardware to perform the task.

In various example embodiments, a trust controller agent is added to a software defined network (SDN) controller, allowing the SDN controller to decide, based on a set of criteria and policies defined in a trust controller agent, whether to use an AI-based/machine-learning (ML) trust manager or a deterministic trust manager. The ability to substitute a deterministic trust manager for a ML trust manager that is being misused or otherwise failing to satisfy performance criteria may be consider a "safety fuse," because the offending ML trust manager is removed from service to prevent further "damage" to a network in much the same way a fuse prevents damage to an electrical device in the case of a circuit malfunction.

In example embodiments, to protect trust management in a network, a deterministic trust manager, which may provide a fully deterministic trust management solution, can be substituted for the ML Trust Manager if misuse of the ML trust manager is detected or suspected.

In various example embodiments a Trust Controller Agent (TCA) generates and sends an internal alarm to a Selector Agent when the ML Trust Manager Agent is not to be selected initially, and/or when the ML Trust Manager Agent is to be deselected. In some such embodiments, internal alarms are generated and transmitted in response to detected or suspected misuse of the ML Trust Manager Agent. In some example embodiments external alarms are optionally transmitted to the Selector Agent by one or more trusted external managers in the event that ML misuse is detected and/or suspected.

In example embodiments, the Selector Agent, acts as a logic multiplexer that immediately activates or deactivates certain ML Trust management agents, and/or re-assigns trust management duties to a deterministic agent in response to either or both of an external or an internal alarm being triggered.

According to various example embodiments, a Software-Defined Network Controller includes at least one processor and memory that stores computer-executable instructions coupled to the at least one processor. The at least one processor is configured to execute the computer-executable instructions to cause the software-defined network controller to monitor performance characteristics of a machine learning trust manager, evaluate the performance characteristics to determine whether the machine learning trust manager satisfies a performance threshold. In response to determining that the machine learning trust manager fails to satisfy the performance threshold, processor deactivates the machine learning trust manager, and activates a deterministic trust manager in place of the machine learning trust manager. The processor and memory, with the computer-executable instructions, serve as means for providing or causing performance of operations described herein for the Software-Defined Network Controller.

In some example embodiments, the Software-Defined Network Controller may optionally be further configured to execute the computer-executable instructions to cause the software-defined network controller to evaluate the performance characteristics by deciding whether decisions made by the machine learning trust manager are trustworthy.

In various example embodiments, the machine learning trust manager fails to satisfy the performance threshold if any or all of the following are true: a threshold number of decisions made by the machine learning trust manager are determined to be untrustworthy, the machine learning trust manager is determined to be incapable of rendering latency-sensitive trust decisions within a threshold time, if the machine learning trust manager fails to achieve a threshold level of fairness related to bandwidth allocation among network clients, or if the machine learning trust manager allows a threshold number of clients to disregard subscriber service level agreements.

In various example embodiments, including any or all of the above example embodiments, the Software-Defined Network Controller may be further configured to execute the computer-executable instructions to cause the software-defined network controller to receive an external alarm from an external source indicating that misuse of the machine learning trust manager has been detected, and in response to receiving the external alarm, deactivate the machine learning trust manager and activate the deterministic trust manager in place of the machine learning trust manager.

In at least one example embodiment, the at least one processor is optionally further configured to execute the computer-executable instructions to cause the software-defined network controller to implement a trust controller agent and a selector agent, wherein the trust controller agent transmits an internal alarm to the selector agent in response to determining that the machine learning trust manager fails to satisfy the performance threshold. In various such example embodiments, the selector agent receives at least one of the internal alarm or the external alarm, and in response deactivates the machine learning trust manager and activates the deterministic trust manager in place of the machine learning trust manager.

In an example embodiment, the at least one processor is optionally further configured to execute the computer-executable instructions to cause the software-defined network controller to evaluate performances of a plurality of trust managers, including at least one machine learning trust manager and at least one deterministic trust manager, and to control which of the plurality of trust managers is activated or deactivated based on the performances of the plurality of trust managers.

In various example embodiments, including any or all of the above example embodiments, the at least one processor is further configured to execute the computer-executable instructions to cause the software-defined network controller to perform an initial evaluation of the machine learning trust manager prior initially activating the machine learning trust manager.

In various example embodiments, a system includes a software-defined network controller including at least one processor and memory storing computer-executable instructions coupled to the at least one processor. The at least one processor is configured to execute the computer-executable instructions to cause the software-defined network controller to selectively activate or deactivate a machine learning trust manager based on a result of a ranking-and-decision policy, wherein the result of the ranking-and-decision policy indicates actual or suspected misuse of the machine learning trust manager. The processor and memory, with the computer-executable instructions, serve as means for providing or causing performance of operations described herein for the system and/or the Software-Defined Network Controller.

In example embodiments, the ranking-and-decision policy is based on evaluation criteria including one or more of a detection error rate, a runtime, fairness between clients of the system, or compliance with service level agreements.

In various example embodiments, including any or all of the above example embodiments, the evaluation criteria are weighted and normalized prior to calculating the result of the ranking-and-decision policy.

In an example embodiment, the at least one processor is configured to execute the computer-executable instructions to cause the software-defined network controller to implement a safeguard manager including a trust controller agent. In some such example embodiments, the trust controller agent defines a first list of evaluation criteria, updates a second list of existing trust manager alternatives, and defines an order of importance of each of the evaluation criteria. In further example embodiments, the order of importance of particular evaluation criteria are determined according to at least one of a user preference and application performance requirements.

In yet additional example embodiments, the at least one processor is configured to execute the computer-executable instructions to cause the software-defined network controller to identify actual or suspected misuse by comparing the result of the ranking-and-decision policy to a threshold value. In any or all of the above example embodiments, the system may also include at least one machine learning trust manager coupled to the software defined network controller, and at least one deterministic trust manager coupled to the software defined network controller.

In some example embodiments, including any or all of the above example embodiments, the at least one processor is optionally configured to execute the computer-executable instructions to cause the software-defined network controller to periodically apply the ranking-and-decision policy to each of a plurality of machine learning trust managers, and create an ordered list of the plurality of machine learning trust managers based on results of applying the ranking-and-decision policy to each of the plurality of machine learning trust managers.

In yet another example embodiment, a device includes at least one processor, and memory coupled to the at least one processor. The memory stores computer-executable instructions, wherein the at least one processor is configured to execute the computer-executable instructions to cause the software-defined network controller to identify actual or suspected misuse of one or more machine learning trust managers, and in response to identifying the actual or suspected misuse of the one or more machine learning trust managers, deactivating the one or more machine learning trust managers, and activating a deterministic trust manager in place of the one or more machine learning trust managers. The processor and memory, with the computer-executable instructions, serve as means for providing or causing performance of operations described herein for the device.

In some example embodiments, the at least one processor is further configured to execute the computer-executable instructions to cause the software-defined network controller to identify the actual or suspected misuse of the one or more machine learning trust managers based on one or more of an external alarm received from an external source, or a ranking-and-decision policy applied to the one or more machine learning trust managers, wherein the ranking-and-decision policy is based on evaluation criteria including one or more of a detection error rate, a runtime, fairness between clients of a communication network, or compliance with service level agreements.

Further areas of applicability will become apparent from the description provided herein. The description and specific examples in this summary are intended for purposes of illustration only and are not intended to limit the scope of the present disclosure.

DRAWINGS

Example embodiments will become more fully understood from the detailed description given herein below and the accompanying drawings, wherein like elements are represented by like reference numerals. The example embodiments are given by way of illustration only, and thus are not limiting of this disclosure.

FIG. 1 is a block diagram illustrating example embodiments of a software defined network (SDN) controller architecture.

FIG. 2 is a block diagram illustrating example embodiments of one or more of the SDN controllers including Trust Capabilities, as shown in FIG. 1.

FIG. 3 is a flowchart illustrating example embodiments of a method of controlling Trust Managers.

FIG. 4 is a flowchart illustrating example embodiments of determining whether a Trust Manager is to be deactivated.

FIG. 5 is a block diagram illustrating an example embodiment of a processing device configurable to implement example embodiments of an SDN controller as disclosed herein.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

DETAILED DESCRIPTION

Example embodiments will now be described more fully with reference to the accompanying drawings.

When considering the following example embodiments, it will be appreciated that, although the use of Machine Learning (ML), Deep Learning (DL), and Artificial Intelligence (AI) (collectively referred to herein as ML) may be useful for applications in computer networks and telecommunications, the use of these algorithms creates new types of risks. Indeed, in the case of network control applications (e.g., with the use of SDN Controllers), ML for network path and request control can lead to important security risks if ML algorithms are misused or compromised.

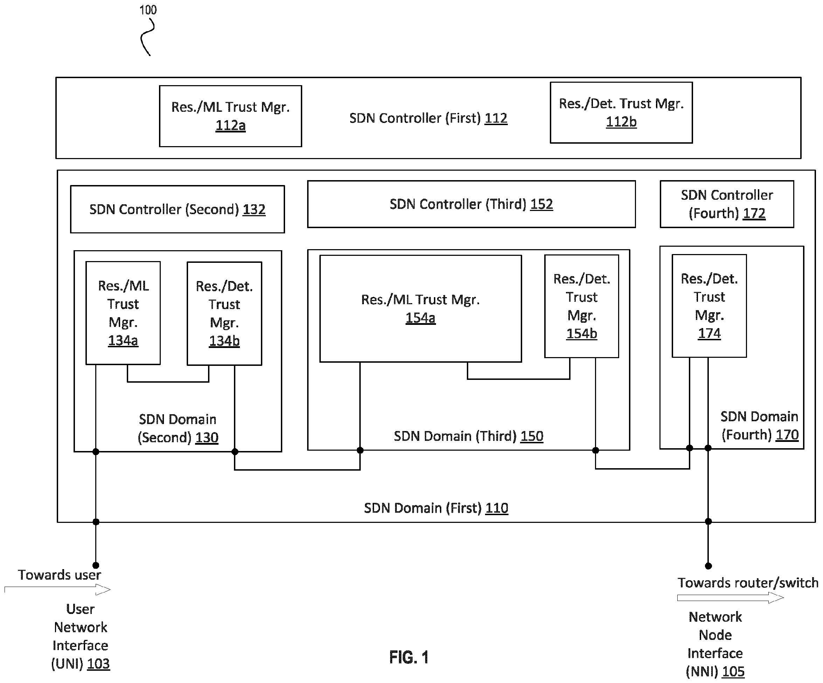

Referring to FIG. 1, example embodiments of a software defined network (SDN) controller architecture 100 will be discussed. In various example embodiments, each SDN controller is responsible for blocking paths or requests that have a security issue, e.g., paths or requests that are invalid or insecure. In case of ML misuse, new requests may not be able to be served, which may cause the SDN control system to be compromised. In various example embodiments, a safe and deterministic solution for ML Trust Management in IP networks controls the behavior of ML trust agents and/or algorithms when the result is suspected to be erroneous or malicious. As used herein, the terms "deterministic," "deterministic solution," or "deterministic trust manager" are used to refer to an algorithm, solution involving the algorithm, and/or a device employing such an algorithm that causally depends on the algorithm inputs. That is to say, the output of a "deterministic trust manager" is non-random, and repeatable, such that a particular set of inputs always results in the same output.

SDN controller architecture 100 includes SDN first domain 110, SDN second domain 130, SDN third domain 150, and SDN fourth domain 170. Each of the SDN second domain 130, SDN third domain 150, and SDN fourth domain 170 are subdomains of the SDN first domain 110.

SDN second domain 130 includes SDN second controller 132, and second resources 134a and 134b. SDN third domain 150 includes SDN third controller 152, and third resources 154a and 154b. SDN fourth domain 170 includes SDN fourth controller 172 and fourth resource 174. SDN first domain 110 includes SDN first controller 112, which is connected to each of SDN second controller 132, SDN third controller 152, and SDN fourth controller 172. SDN first domain 110, as illustrated, may primarily manage the subdomains, and resources assigned to those subdomains. In various example embodiments, the arrangement and/or assignment of resources between and among the various domains of SDN 100 can be dynamically allocated by SDN first controller 112, for use by SDN second controller 132, SDN third controller 152, and/or SDN fourth controller 172.

In an example embodiment, second resources 134a and 134b, third resources 154a and 154b, and fourth resource 174 may include one or more machine learning (ML) trust managers and one or more deterministic trust managers. In an example embodiment, second resources 134a, 134b and third resources 154a, 154b may include one or more ML trust managers implementing different decision making algorithms, and fourth resource 174 may be a deterministic trust manager. In other example embodiments, one or more deterministic trust managers and/or ML trust managers may be implemented using any of the various domain resources.

In some example embodiments, one or more of SDN first controller 112, SDN second controller 132, SDN third controller 152, and/or SDN fourth controller 172 include trust management functionality, such that one or more of the controllers may activate or deactivate one or more ML trust managers and/or deterministic trust managers based on performance of those trust managers. In an example embodiment, SDN second controller 132 may selectively activate and/or deactivate second resource 134a or 134b, which may be trust managers, based on performance and/or misuse of one or more of the trust managers. Similarly, in another example embodiment, SDN third controller 152 may selectively activate and/or deactivate third resource 154a or 154b, which may be trust managers, based on performance of one of one or more of the trust managers.

In yet another example embodiment, SDN first controller 112 may control activation and/or deactivation of machine learning trust manager 112a and deterministic trust manager 112b, and/or control actiavation and/or deactivation of one or more trust managers represented by any of second resources 134a, 134b, third resources 154a,154b, and/or fourth resource 174, based on performance and/or misuse of the trust managers. In some such example embodiments, SDN first controller 112 and/or SDN second controller 132 may selectively activate and/or deactivate trust managers implemented by second resource 134a or 134b, SDN first controller 112 and/or SDN third controller 152 may selectively activate and/or deactivate trust managers implemented by second resource 154a or 154b, and SDN first controller 112 and/or SDN fourth controller 172 may selectively activate and/or deactivate trust manager(s) implemented by fourth resource 174.

SDN controller architecture 100 also includes user network interface (UNI) 103 and network node interface (NNI) 105. In an example embodiment, requests, replies, instructions, content, control signals, and/or other communications arriving from a network (not illustrated) for delivery to a user (not illustrated) are received by SDN controller architecture 100 at NNI 105. At least one trust manager included in SDN controller architecture 100 verifies that a received communication is trustworthy enough to be delivered to the user. If the trust manager evaluating a particular communication deems that communication to be trustworthy, SDN controller architecture 100 delivers the communication to the user via UNI 103.

In various example embodiments, requests, replies, instructions, content, control signals, and/or other communications arriving from a user for delivery to a network destination are evaluated for trustworthiness by one or more trust managers included in SDN controller architecture 100, and delivered if deemed trustworthy.

In example embodiments, ML trust managers included in SDN controller architecture 100 are monitored and evaluated by one or more of SDN first controller 112, SDN second controller 132, SDN third controller 152, and/or SDN fourth controller 172. If an SDN controller determines that an ML trust manager is not performing adequately, is compromised, is being misused, and/or should be removed from service for some other reason, the SDN controller can deactivate the offending ML trust manager and replace it with a deterministic trust manager.

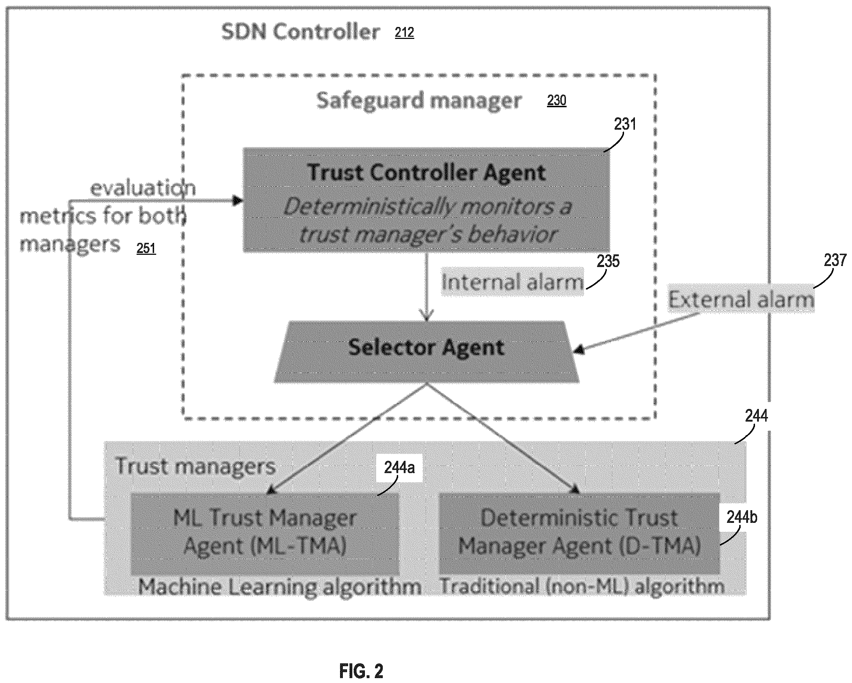

Referring next to FIG. 2, example embodiments of one or more of the SDN controllers including Trust Capabilities, as shown in FIG. 1,will be discussed. In an example embodiment, SDN controller 212 includes a safeguard manager 230 and trust managers 244. Safeguard manager 230 includes trust controller agent 231, which monitors trust managers 244, and selector agent 233, which controls activation and/or deactivation of trust managers 244. Trust managers 244 include ML trust manager agent (ML-TMA) 244a, which employs a machine learning algorithm (MLA), and deterministic trust manager agent (D-TMA) 244b, which employs a deterministic, non-machine learning, algorithm.

In an example embodiment, trust managers 244 collect evaluation metrics 251, and provide them to trust controller agent 231. Trust controller agent 231 evaluates the evaluation metrics 241 to identify actual or potential misuse and/or failure to satisfy a performance threshold of one or more trust managers, e.g., ML-TMA 244a. In an example embodiment, if actual or potential misuse and/or failure to satisfy a performance threshold is identified, trust controller agent 231 generates internal alarm 235, and transmits internal alarm 235 to selector agent 233, which deactivates ML-TMA 244a and activates D-TMA 244b in its place. In some example embodiments, selector agent 233 may also deactivate ML-TMA 244a and activate D-TMA 244b in its place in response to receiving external alarm 237.

In an example embodiment, the evaluation performed by trust controller agent 231 includes defining a list of evaluation criteria (sometimes referred to herein as evaluation metrics) that will be used for evaluation of misuse of ML Trust Manager(s). The evaluation criteria may include, but are not limited to, one or more of a Detection Error Rate (DER), Runtime (RT), fairness between clients, compliance with a service level agreement (SLA), or the like.

As used herein, the DER is a measure of the rate at which an ML Trust Manager fails to evaluate the trustworthiness of a situation. For example, if an ML Trust Manager becomes incapable of accurately deciding the trustworthiness of new situations, the DER rate will increase.

As used herein, RT is a measure of how well an ML Trust manager handles real-time, latency-sensitive applications. In an example embodiment, RT may be based on the latency of executing mission-critical trust decisions.

As used herein, fairness between clients is a measure based on whether or not decisions by an ML Trust Manager achieve fairness between bandwidth allocated to network clients, whether or not decisions by an ML Trust Manager achieve fairness in relation to achievable quality of service (QoS), or the like.

As used herein, compliance with SLA is a measure based on whether or not an ML Trust Manager allows one or more clients to disregard and/or disrespect subscribed service level agreement (SLA) performance measures.

In an example embodiment, evaluation criteria chosen by trust controller agent 231 for inclusion in the list of evaluation criteria used to evaluate ML Trust Manager(s) are weighted and summed to create a ranking and decision policy, which in at least one embodiment is defined as:

$$\sum_{i=1}^{N} w_i \cdot C_i$$

In this formula, $C_i$ is the criterion, $w_i$ is the weight allocated to each criterion and $N$ is the total number of criteria in the ranking and decision policy. In an example embodiment, the chosen criteria are the same for all ML trust manager alternatives. As used herein, the term "trust manager alternatives" refers to trust managers deployed at, and/or controllable by, a particular SDN controller. In at least one example embodiment, all evaluation criteria are normalized before starting the ranking process.

In an example embodiment, trust control agent 231 generates and/or updates a list of existing trust manager alternatives. In example embodiments, at least one trust manager is an ML-TMA, and at least one trust manager is a D-TMA.

In an example embodiment, trust control agent 231 defines the order of importance (the weight) of each evaluation criterion in the ranking and decision policy. In an example embodiment, each weight is a positive real number in the range [0,1], and weights may be assigned to each criterion according to user's preferences and/or according to application performance requirements. For example, if the ranking and the decision policy is based on ML Trust Manager performance in mission-critical applications, then the greatest order of importance (the greatest weight) may be allocated to RT criteria.

In various example embodiments, the threshold for the acceptable ranking (THR) and detection policy scores for all ML trust managers may be based on previous decisions made by the trust controller agent 231 and/or previous decisions made by ML trust managers.

In various example embodiments, trust controller agent 231 periodically evaluates trust managers included in the list of trust manager alternatives by applying a previously defined ranking and decision policy. In an example embodiment, for each trust manager alternative that is ML based, the trust controller agent 231 computes the ranking and decision score $S_{a_j}$:

$$S_{a_j} = \sum_{i=1}^{N} w_i(a_j) \cdot C_i(a_j), \quad \forall a_j \in A$$

The set of trust managers included in the list of trust manager alternatives is denoted by $A$. A single element of $A$ (a given trust manager alternative) is noted by $a_j$. The criteria $C_i$ and weight $w_i$ for trust manager alternative $a_j$ are noted as $C_i(a_j)$ and $w_i(a_j)$, respectively.

The trust controller agent 231 then creates an ordered list of the ML trust manager alternatives in the increasing order of their ranking and decision scores $S_{a_j}$. For each ML trust manager, if $S_{a_j} <$ THR, internal alarm 235 is generated by trust controller agent 231 and used by selector agent 233 to deactivate the ML trust manager in question. Any other ML trust managers are activated via the appropriate selector agent signals 239a or 239b. Independently, selector agent 233 may also immediately apply external alarm signals, such as external alarm 237, if such exist. In various embodiments, external alarm signals can be provided by other SDN controllers, by a trust monitoring service, by one or more external network elements monitoring various quality of service (QoS) parameters, manual user shutdown commands, or the like.

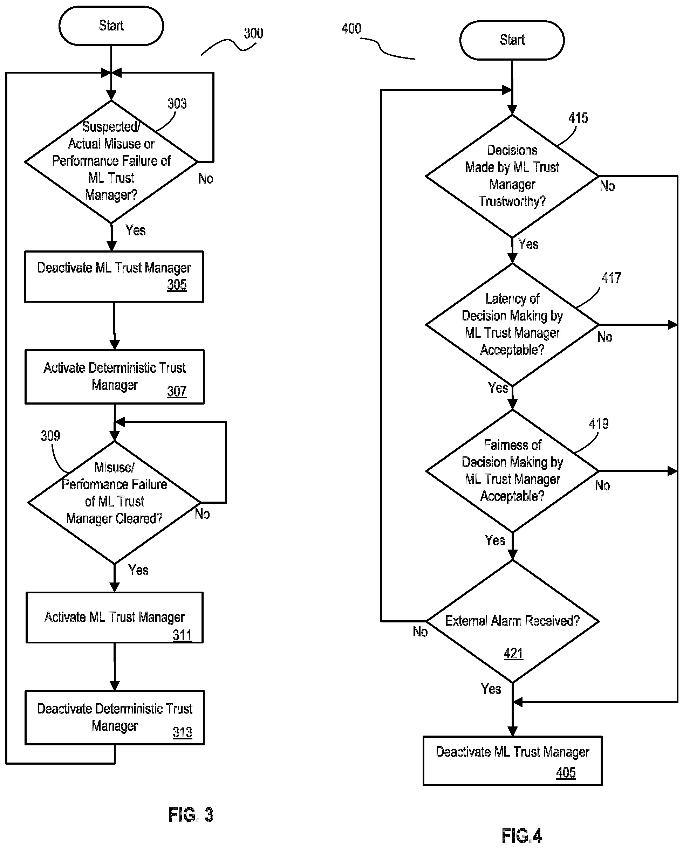

Example embodiments illustrating methods that may be performed by an SDN controller, such as SDN controller 212 illustrated in FIG. 2, will be discussed with reference to FIGS. 3 and 4.

Referring to FIG. 3, example embodiments of a method 300 of controlling Trust Managers will be discussed.

As illustrated by block 303, an SDN controller determines whether an ML trust manager is experiencing suspected/actual misuse or a performance failure. In an example embodiment, the suspected/actual misuse or performance failure may be determined using one or more ranking and decision policies, as discussed above.

As illustrated by blocks 305 and 307, if the SDN controller determines that suspected/actual misuse or a performance failure of an ML trust manager is present, the SDN controller deactivates the ML trust manager at block 305, and at block 307 activates a deterministic trust manager to replace the ML trust manager that was deactivated.

As illustrated by block 309, at some point later in time, which in an example embodiment may be, but need not be the expiration of a fixed period of time, the SDN controller may perform another check to determine whether an ML trust manager is still experiencing suspected/actual misuse or a performance failure, or whether the misuse or performance failure has been cleared. In an example embodiment, the suspected/actual misuse or a performance failure may be determined to have been cleared in response to a threshold number of acceptable ranking and decision policy results, in response to updating a ranking and decision policy associated with the ML trust manager, in response to a change in user or a network QoS or other policies, or the like.

In various example embodiments, block 309 may be repeated with a periodicity corresponding to a usual control plane delay. In some such example embodiments, the latency between successive launches of the step 309 could be from a few ms to a few seconds.

As illustrated by blocks 311 and 313, if the SDN controller determines that suspected/actual misuse or a performance failure of an ML trust manager has been cleared, the SDN controller reactivates the ML trust manager at block 311, and at block 313 deactivates a deterministic trust manager, so that the ML trust manager is once again performing trust management in the network. Subsequent to completion of block 313, method 300 returns to block 303.

Referring next to FIG. 4, example embodiments of a method 400 for determining whether a Trust Manager is to be deactivated will be discussed. Various example embodiments described herein illustrate serial sequences of decisions and actions for ease of explanation. These example embodiments are, however, not limited to serial implementations, but also encompass parallel decisions and actions.

As illustrated by block 415, a check may be made to determine whether decisions made by an ML trust manager are trustworthy. In an example embodiment, the check made at block 415 may be performed as part of an aggregated decision making process combining decisions regarding actual/potential misuse and/or performance, such as a decision based on an overall ranking and decision policy. In other example embodiments, the decision regarding trustworthiness may be made independently, using a dedicated trustworthiness ranking and decision policy, with the results of the trustworthiness decision used as an input to an overall ranking and decision policy.

Decisions made by an ML trust manager may be considered to be trustworthy if a detection error rate satisfies a DER threshold. In an example implementation, the DER threshold may indicate a fixed number detection errors per unit time, a ratio of detection errors to accurate detections, or the like. In various example embodiments the trustworthiness of trust decisions made by the ML trust manager may be determined on a continuum, rather based on discreet thresholds.

As illustrated by block 417, a check may be made to determine whether the latency of decisions made by an ML trust manager is within acceptable limits.

In an example embodiment, the check made at block 417 may be performed as part of an aggregated decision making process combining decisions regarding actual/potential misuse and/or performance, such as a decision based on an overall ranking and decision policy. In other example embodiments, the decision regarding latency may be made independently, using a dedicated latency ranking and decision policy, with the results of the latency decision used as an input to an overall ranking and decision policy.

The latency of trust decisions made by an ML trust manager may be considered to be acceptable if the latency is below a latency threshold. In an example implementation, the latency threshold may include a first latency threshold indicating when latency of a particular decision by the ML trust manager is considered to be excessive, and a second latency threshold indicating when a number of latency failures is considered to be problematic. Different first and second latency thresholds may be used, depending on the time-criticality of the trust decisions being made by the ML trust manager. In various example embodiments the latency of trust decisions is determined on a continuum, rather based on discreet thresholds.

As illustrated by block 419, a check may be made to determine whether the fairness of decisions made by an ML trust manager is within acceptable limits. In an example embodiment, the check made at block 419 may be performed as part of an aggregated decision making process combining decisions regarding actual/potential misuse and/or performance, such as a decision based on an overall ranking and decision policy. In other example embodiments, the decision regarding fairness may be made independently, using a dedicated fairness ranking and decision policy, with the results of the fairness decision used as an input to an overall ranking and decision policy.

The fairness of trust decisions made by an ML trust manager may be considered to be acceptable if a small number of clients are not preventing a larger number of clients from accessing resources due to extraordinarily large resource usage by a smaller number of clients. In an example implementation, a fairness threshold may include a number of times a network client is prevented from receiving access to network resources because of resource usage by one or more other network clients. In an example embodiment, if decisions by the ML trust manager allow a particular client to be prevented from accessing requested resources more than a first threshold number of times, the ML trust manager decisions may be considered unfair. In another example embodiment, if decisions by the ML trust manager allow a particular client to prevent more than a second threshold number of other clients from accessing resources, the ML trust manager decisions may be considered unfair. Similar thresholds related to QoS, SLA performance measures, alone or in conjunction with other factors, may be used to determine the fairness of ML trust manager decisions.

As illustrated by block 421, a check is made to determine whether an external alarm indicating that one or more available ML trust managers are exposed to actual/potential misuse and/or performance problems has been received by an SDN controller.

In an example embodiment, if the determination at block 421 indicates that an external alarm indicating actual/potential misuse and/or performance problems with a given ML trust manager is received by an SDN controller, that ML trust manager is deactivated, as illustrated by block 405. As further illustrated by block 405, a "NO" result at any or all of blocks 415 (is ML trust manager is trustworthy), 417 (is latency of ML trust manager is acceptable), 419 (is fairness of ML trust manager is acceptable) results in the ML trust manager being deactivated.

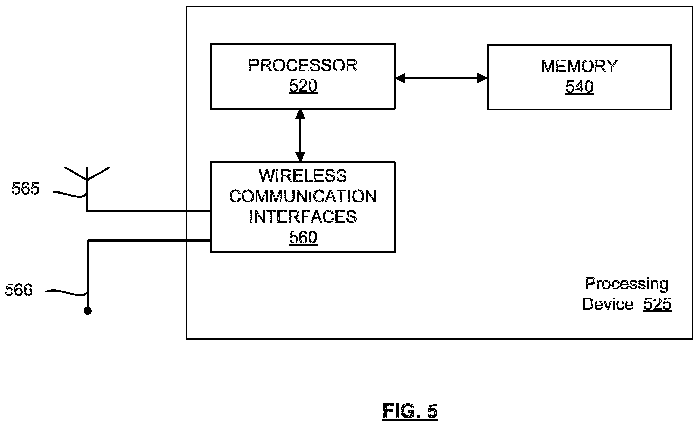

Referring next to FIG. 5, a processing device 525 configurable to implement example embodiments of an SDN controller will be discussed. Additionally, one or more processing devices such as processing device 525 may be used to implement machine learning trust managers, deterministic trust managers, other network elements, agents hosted by SDN controllers, and the like. As shown, processing device 525 includes: a memory 540; a processor 520 connected to the memory 540; various interfaces 560 connected to the processor 520; one or more (e.g., a plurality of) antennas or antenna panels 565 connected to the various interfaces 560; and one or more wired connections 566. The various interfaces 560 and the antenna 565 may constitute a transceiver for transmitting/receiving data from/to other network elements via one or more antenna beams. Depending on the implementation of processing device 525, the processing device 525 may include many more components than those shown in FIG. 5. However, it is not necessary that all of these generally conventional components be shown in order to disclose the illustrative example embodiment(s).

The memory 540 may be a computer readable storage medium that generally includes a random-access memory (RAM), read only memory (ROM), and/or a permanent mass storage device, such as a disk drive. The memory 540 also stores an operating system and any other routines/modules/applications for providing the functionalities of processing device 525 to be executed by the processor 520. These software components may also be loaded from a separate computer readable storage medium into the memory 540 using a drive mechanism (not shown). Such separate computer readable storage medium may include a disc, tape, DVD/CD-ROM drive, memory card, or other like computer readable storage medium (not shown). In some example embodiments, software components may be loaded into the memory 540 via one of the various interfaces 560, rather than via a computer readable storage medium.

The processor 520 may be configured to carry out instructions of a computer program by performing the arithmetical, logical, and input/output operations of the system. Instructions may be provided to the processor 520 by the memory 540.

The various interfaces 560 may include components that interface the processor 520 with the antenna 565, or other input/output components. As will be understood, the various interfaces 560 and programs stored in the memory 540 to set forth the special purpose functionalities of the SDN controller will vary depending on the implementation of the processing device 525.

The interfaces 560 may also include one or more user input devices (e.g., a keyboard, a keypad, a mouse, or the like) and user output devices (e.g., a display, a speaker, or the like).

While one or more example embodiments may be described from the perspective of an SDN controller, it should be understood that one or more example embodiments discussed herein may be performed by one or more processors (or processing circuitry) at the applicable device. For example, according to one or more example embodiments, at least one memory may include or store computer-executable instructions which, when executed by at least one processor, cause and SDN controller or a trust manager to perform one or more operations discussed herein.

As discussed herein, the terminology "one or more" and "at least one" may be used interchangeably.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items. Similarly, the term "or" includes both its conjunctive and disjunctive meanings.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe a physical relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, figures shown in succession may in fact be executed substantially concurrently or may sometimes be executed in the reverse order, depending upon the functionality/acts involved.

Specific details are provided in the preceding description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures, and techniques may be shown without unnecessary detail in order to avoid obscuring example embodiments.

As discussed herein, illustrative embodiments have been described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently, or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other non-transitory, physical media capable of storing or instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory, and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (*i.e.*, open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, user equipment, other network elements, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims. The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1. A software-defined network controller comprising means for:

   monitoring performance characteristics of a machine learning trust manager;
   evaluating the performance characteristics to determine whether the machine learning trust manager satisfies a performance threshold; and
   in response to determining that the machine learning trust manager fails to satisfy the performance threshold, deactivating the machine learning trust manager, and activate a deterministic trust manager in place of the machine learning trust manager.

2. The software-defined network controller of claim 1, comprising means for:
   evaluating the performance characteristics by determining whether decisions made by the machine learning trust manager are trustworthy.

3. The software-defined network controller of claim 1 or 2, wherein
   the machine learning trust manager fails to satisfy the performance threshold if any or all of the following are true:

   (i) a threshold number of decisions made by the machine learning trust manager are determined to be untrustworthy;
   (ii) the machine learning trust manager is determined to be incapable of rendering latency-sensitive trust decisions within a threshold time;
   (iii) the machine learning trust manager fails to achieve a threshold level of fairness related to bandwidth allocation among network clients;
   (iv) the machine learning trust manager allows a threshold number of clients to disregard subscriber service level agreements.

4. The software-defined network controller of any of claims 1 to 3, comprising means for:

   receiving an external alarm from an external source indicating that misuse of the machine learning trust manager has been detected; and
   in response to receiving the external alarm, deactivating the machine learning trust manager and activating the deterministic trust manager in place of the machine learning trust manager.

5. The software-defined network controller of claim 4, comprising means for:

   implementing a trust controller agent and a selector agent, wherein
   the trust controller agent is configured to transmit an internal alarm to the selector agent in response to determining that the machine learning trust manager fails to satisfy the performance threshold,
   the selector agent is configured to receive at least one of the internal alarm or the external alarm, and
   in response to receiving the at least one of the internal alarm or the external alarm, the selector agent is configured to deactivate the machine learning trust manager and activate the deterministic trust manager in place of the machine learning trust manager.

6. The software-defined network controller of any of claims 1 to 5, comprising means for:
   evaluating performances of a plurality of trust managers, including at least one machine

   learning trust manager and at least one deterministic trust manager; and controlling which of the plurality of trust managers is activated or deactivated based on

the performances of the plurality of trust managers.

7. The software-defined network controller of any of claims 1 to 6, comprising means for:
performing an initial evaluation of the machine learning trust manager prior initially activating the machine learning trust manager.

8. A system comprising:
a software-defined network controller comprising means for
selectively activating or deactivating a machine learning trust manager based on a result of a ranking-and-decision policy, wherein the result of the ranking-and-decision policy indicates actual or suspected misuse of the machine learning trust manager.

9. The system of claim 8, wherein:
the ranking-and-decision policy is based on evaluation criteria including one or more of a detection error rate, a runtime, fairness between clients of the system, or compliance with service level agreements.

10. The system of claim 8 or 9, wherein the software-defined network controller comprises means for:
implementing a safeguard manager including a trust controller agent, wherein the trust controller agent is configured to:

define a first list of evaluation criteria,
update a second list of existing trust manager alternatives, and
define an order of importance of each of the evaluation criteria.

11. The system of any of claims 8 to 10, further comprising:

at least one machine learning trust manager coupled to the software defined network controller; and
at least one deterministic trust manager coupled to the software defined network controller.

12. The system of any of claims 8 to 11, wherein the software-defined network controller comprises means for:
identifying actual or suspected misuse by comparing the result of the ranking-and-decision policy to a threshold value.

13. The system of any of claims 8 to 12, wherein the software-defined network controller comprises means for:

periodically applying the ranking-and-decision policy to each of a plurality of machine learning trust managers; and
creating an ordered list of the plurality of machine learning trust managers based on results of applying the ranking-and-decision policy to each of the plurality of machine learning trust managers.

14. A device comprising:

at least one processor;
memory coupled to the at least one processor, the memory storing computer-executable

instructions wherein the at least one processor is configured to execute the computer-executable instructions to cause a software-defined network controller to
identify actual or suspected misuse of one or more machine learning trust managers, and in response to identifying the actual or suspected misuse of the one or more machine
learning trust managers, deactivate the one or more machine learning trust managers, and activate a deterministic trust manager in place of the one or more machine learning trust managers.

15. The device of claim 14, wherein:

the at least one processor is further configured to execute the computer-executable instructions to cause the software-defined network controller to
identify the actual or suspected misuse of the one or more machine learning trust managers based on one or more of an external alarm received from an external source, or a ranking-and-decision policy applied to the one or more machine learning trust managers, wherein the ranking-and-decision policy is based on evaluation criteria including one or more of a detection error rate, a runtime, fairness between clients of a communication network, or compliance with service level agreements.

FIG. 1

EP 4 580 125 A1

FIG. 2

*300*

**Start**

303

Suspected/
Actual Misuse or
Performance Failure of
ML Trust
Manager? — No

Yes

Deactivate ML Trust Manager
305

Activate Deterministic Trust
Manager 307

309

Misuse/
Performance Failure
of ML Trust
Manager Cleared? — No

Yes

Activate ML Trust Manager
311

Deactivate Deterministic Trust
Manager 313

**FIG. 3**

*400*

**Start**

415

Decisions
Made by ML Trust
Manager
Trustworthy? — No

Yes

417

Latency of
Decision Making by
ML Trust Manager
Acceptable? — No

Yes

419

Fairness of
Decision Making by
ML Trust Manager
Acceptable? — No

Yes

External Alarm Received?
421 — No

Yes

Deactivate ML Trust Manager
405

**FIG.4**

```
┌─────────────────────────────────────────────────────────────┐
│                                                             │
│   ┌──────────────────┐         ┌──────────────────┐         │
│   │    PROCESSOR     │ <─────> │     MEMORY       │         │
│   │       520        │         │      540         │         │
│   └──────────────────┘         └──────────────────┘         │
│            ^                                                 │
│            │                                                 │
│            v                                                 │
│   ┌──────────────────┐                                      │
│   │    WIRELESS      │                                      │
│   │  COMMUNICATION   │                                      │
│   │   INTERFACES     │                                      │
│   │       560        │                                      │
│   └──────────────────┘                                      │
│                                                             │
│                                   Processing                │
│                                   Device  525               │
└─────────────────────────────────────────────────────────────┘
```

565

566

**FIG. 5**

Europäisches
Patentamt
European
Patent Office
Office européen
des brevets

# EUROPEAN SEARCH REPORT

**Application Number**

EP 24 22 0767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/259700 A1 (BHALLA SHELLEY A [US] ET AL) 13 August 2020 (2020-08-13) * paragraphs [0003] - [0006], [0092] - [0131] * * figure 2 * | 1-15 | INV. H04L9/40 H04L41/16 H04L41/40 |
| A | US 2022/382615 A1 (TURK YEKTA [TR] ET AL) 1 December 2022 (2022-12-01) * paragraphs [0037] - [0068] * | 1-15 | |
| A | WO 2023/006194 A1 (NOKIA TECHNOLOGIES OY [FI]) 2 February 2023 (2023-02-02) * pages 2-7,8-20 * | 1-15 | |
| A | US 2023/128567 A1 (MERMOUD GRÉGORY [CH] ET AL) 27 April 2023 (2023-04-27) * paragraphs [0023] - [0080] * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 5 May 2025 | Veloso González, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 0767

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | Publication date | Patent family member(s) | | Publication date |
|---|---|---|---|---|
| US 2020259700 A1 | 13-08-2020 | CA | 3124442 A1 | 13-08-2020 |
| | | CN | 113424494 A | 21-09-2021 |
| | | EP | 3903453 A1 | 03-11-2021 |
| | | US | 2020259700 A1 | 13-08-2020 |
| | | WO | 2020163559 A1 | 13-08-2020 |
| US 2022382615 A1 | 01-12-2022 | US | 2022382615 A1 | 01-12-2022 |
| | | WO | 2021079206 A1 | 29-04-2021 |
| WO 2023006194 A1 | 02-02-2023 | EP | 4378136 A1 | 05-06-2024 |
| | | WO | 2023006194 A1 | 02-02-2023 |
| US 2023128567 A1 | 27-04-2023 | NONE | | |

EPO FORM P0459

For more details about this annex : see Official Journal of the European Patent Office, No. 12/82